# FASCICULE DE BREVET EUROPEEN

(11) **EP 3 506 595 B1**
(45) Date de publication et mention de la délivrance du brevet: **28.01.2026**
(21) Numéro de dépôt: 18215805.5
(22) Date de dépôt: 21.12.2018
(51) Int. Cl.: H04L 9/40, H04W 12/00, H04W 4/90, H04W 12/45, H04W 88/06, H04W 88/16, H04L 41/0654, H04L 43/50

(54) **SYSTÈME DE COMMUNICATION SECURISÉ À HAUTE DISPONIBILITÉ**
GESICHERTES KOMMUNIKATIONSSYSTEM MIT HOHER VERFÜGBARKEIT
SYSTEM FOR HIGH-AVAILABILITY SECURE COMMUNICATION

(30) Priorité: 27.12.2017 FR 1701384
(43) Date de publication de la demande: 03.07.2019
(73) Titulaire: Bull SAS, 78340 Les Clayes-sous-Bois (FR)
(72) Inventeur: OLIER, Denis, 78260 ACHERES (FR)
(74) Mandataire: IPAZ

(56) Documents cités:
- EP-A1- 2 887 571
- EP-A1- 2 947 615
- WO-A1-2010/003464
- WO-A1-2011/041913
- FR-A1- 3 019 435
- US-B1- 8 909 766

## Description

### Domaine technique de l'invention

L'invention a pour objet un système de communication sécurisé à haute disponibilité. Le domaine de l'invention est celui des communications sécurisées. Par sécurisées on entend une sécurité durcie pour un usage par ou pour des services d'un état. Il convient donc que ces communications ne puissent être empêchées ou interceptées. Dans ce contexte une haute disponibilité est une résistance au brouillage et à la panne, que cette panne soit due à la défaillance physique d'un équipement ou à une défaillance logique. Ces pannes sont des pannes accidentelles, conjoncturelles ou intentionnelles.

Une panne conjoncturelle est, par exemple, due à une situation exceptionnelle pour laquelle un équipement n'avait pas été dimensionné. De telles pannes ont pu survenir, par exemple, au début de la messagerie texte au moment des fêtes de fin d'année. Une panne intentionnelle est une tentative volontaire de mise en défaut d'un système, par exemple avec une attaque par déni de service.

Le domaine de l'invention est aussi celui des communications en temps de crise c'est-à-dire des communications à établir dans un contexte sortant de l'ordinaire. Un contexte hors norme est, par exemple, une catastrophe naturelle, une situation dans laquelle l'intégrité physique de personnes est menacée, un sinistre de grande ampleur, une opération militaire. Un contexte hors norme est encore toute situation conduisant les agents civils, par opposition aux agents de la puissance publique, à augmenter leur consommation des ressources de communication.

### Etat de la technique antérieur

Dans l'état de la technique on sait que des événements exceptionnels peuvent se produire. Ces situations induisent généralement une panique qui du point de vu des systèmes de communications classiques, est une attaque susceptible de nuire à leur fonctionnement. De telles situations impliquent souvent des communications portant et comportant des données sensibles. Il est donc important que ces données soient correctement acheminées sans être interceptées.

Dans l'état de la technique on connait des dispositifs permettant d'établir des communications sécurisées. Cependant ces dispositifs existants imposent que les appareils participant à l'établissement de la communication soient compatibles. Concrètement cela se traduit par le fait que les appareils doivent être les mêmes. Or ces appareils, très spécialisés, offrent des services très réduits. Le plus souvent seules les communications vocales sont possibles.

Un autre problème des dispositifs existants est leur sensibilité à la fiabilité du réseau auquel ils sont connectés. Ce réseau est unique. Dans ces conditions une défaillance de ce réseau est catastrophique est laisse l'utilisateur sans solution simple de continuité. En particulier si l'utilisateur était en train de tenir une conversation, celle-ci est de facto terminée.

Ainsi, le document WO2011/041913 propose un système de communication sécurisé pour un terminal mobile pour l'établissement de communications locale et distante. Ce système permet un nombre de communication important entre des terminaux producteurs de données, et un boitier de communication permettant de communiquer ces données à distance. Cependant, ce système peut manquer de fiabilité si le boitier est défaillant.

Le document FR3019435, propose un procédé de routage de données par un boitier d'accès internet. Le système de communication comprend un boitier de communication qui peut communiquer de manière non filaire avec un second boitier différent, afin de proposer un réseau alternatif, chaque boitier permettant de communiquer sur un réseau distant unique.

### Exposé de l'invention

L'invention permet de résoudre ces problèmes en mettant en œuvre une redondance de réseau. Plus précisément l'invention met en œuvre une redondance de lien de communication. Dans l'invention cette redondance s'appuie sur une redondance physique.

L'invention est définie par la revendication indépendante 1. Des modes de réalisation préférés sont définis dans les revendications dépendantes. Ainsi dans l'invention un terminal, éventuellement standard du marché, se connecte à un boitier de communication qui comporte deux modems permettant chacun d'établir un lien sécurisé vers un serveur d'accès. Le boitier de communication choisit le lien à utiliser en fonction de critères prédéfinis et configurables. Si l'un des liens devient défaillant, toutes les communications sont effectuées en utilisant l'autre lien.

Dans ce dessein l'invention a pour objet un système de communication sécurisé à très haute disponibilité pour un terminal mobile pour l'établissement de communications locale et distante, caractérisé en ce que :
- le terminal est connecté à un boîtier de communication, le dit boîtier de communication présentant au moins 4 interfaces physiques de communication :
   o une de ces interfaces physiques servant à établir des communications (NATM) avec le terminal mobile,
   o deux de ces interfaces physiques servant à établir des communications distantes via des réseaux mobiles
   o la quatrième (270) de ces interfaces physiques servant à établir des communications locales avec un autre boîtier (700) par communication directe et selon un protocole IP selon un plan d'adressage prédéterminé.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- la quatrième interface fonctionne dans une bande de fréquence centrée sur 900MHz,
- le boîtier de communication utilise la quatrième interface lorsque la première interface distante et la deuxième interface distante sont défaillantes
le terminal mobile communique avec un serveur applicatif comme suit :
- le boîtier de communication est connecté à un serveur (500) d'accès par un premier lien (VPN0) établi à travers la première interface physique de communication distante et par un deuxième lien (VPN1) établi à travers la deuxième interface physique de communication distante ;
   o le serveur (600) applicatif est connecté (NATA) au serveur d'accès, le terminal et le serveur applicatif communicant à travers le boitier de communication et le serveur d'accès en utilisant un des deux liens précédemment établis ;
   o le boîtier de communication est la passerelle réseau du terminal ;
   ∘ le boitier de communication :
      - maintient (2020 - 2050) une table locale de routage en fonction de performances d'acheminements d'au moins une interfaces physiques de communications distantes ;
      - maintient (2050) une table distante de routage sur le serveur d'accès pour qu'à un même instant le boîtier de communication et le serveur d'accès utilisent le même lien
- l'interface locale du boîtier de communication est une interface série câblée ;
- l'interface locale du boîtier de communication est une interface de communication sans fil ;
- une performance d'acheminement d'une interface physique de communication est une mesure d'une puissance d'un signal reçu sur l'interface physique de communication distante dont il faut évaluer des performances d'acheminement ;
- une performance d'acheminement d'une interface physique de communication est mesurée par le temps de réponse à un message prédéterminé émis via l'interface de communication distante dont il faut évaluer des performances d'acheminement ;
- le message prédéterminé est émis à une période compris dans l'intervalle 2 secondes - 5 secondes ;
- la performance d'acheminement d'une interface physique est considérée comme défaillante si le temps de réponse au message prédéterminé est supérieur à 1 seconde ;
- le premier lien et le deuxième lien sont des tunnels virtuels privés ;
- le boîtier comporte une mémoire de provision dans laquelle est enregistrée un identifiant d'un terminal, seul le terminal ayant cet identifiant étant autorisé à communiquer avec le boîtier par une interface de communication locale sans fil, le boîtier filtrant les communications effectuées par l'interface de communication locale sans fil, l'identifiant étant une adresse MAC de l'interface physique de communication sans fil du terminal ;
- la mémoire de provision est écrite au moment de la détection d'une connexion sur une interface physique de communication câblée entre le terminal mobile et le boîtier de communication, le terminal jouant le rôle de périphérique du boîtier.

### Brève description des figures

D'autres caractéristiques et avantages de l'invention ressortiront à la lecture de la description qui suit, en référence aux figures annexées, qui illustrent :
- La figure 1, une illustration d'une architecture permettant la mise en œuvre du système de communication de l'invention ;
- La figure 2, une illustration d'étapes du procédé communication mis en œuvre par le système de communication selon l'invention ;
- La figure 3, une illustration en vue logique des communications mises en œuvre par l'invention.

Pour plus de clarté, les éléments identiques ou similaires sont repérés par des signes de référence identiques sur l'ensemble des figures.

L'invention sera mieux comprise à la lecture de la description qui suit et à l'examen des figures qui l'accompagnent. Celles-ci sont présentées à titre indicatif et nullement limitatif de l'invention.

### Description détaillé d'un mode de réalisation

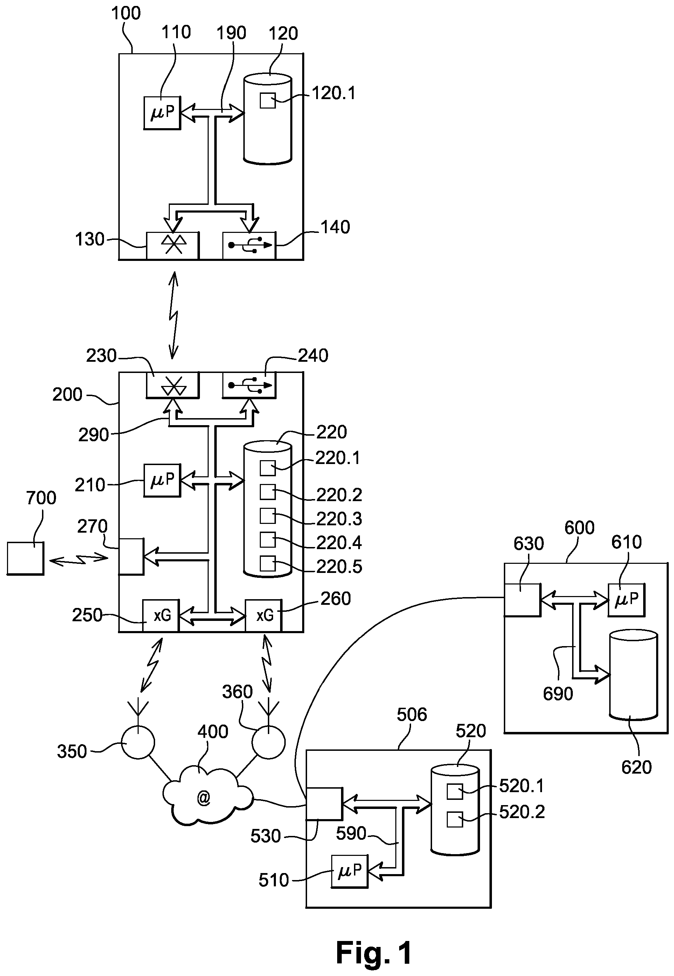

La figure 1 montre un terminal 100 mobile. Le terminal 100 mobile est, par exemple, un téléphone intelligent (aussi appelé « smartphone »). Le terminal 100 mobile peut aussi être une tablette. D'une manière plus générale, pour l'invention, on pourra considérer comme un terminal mobile tout dispositif de traitement de données transportable qui comporte au moins les caractéristiques décrites pour le terminal 100 mobile.

La figure 1 montre les caractéristiques que doit avoir un terminal mobile pour mettre en œuvre l'invention.

La figure 1 montre que le terminal 100 mobile comporte :
- Un microprocesseur 110 ;
- Une mémoire 120. La mémoire est, dans cette description, représentée de manière unifiée. Dans la pratique un dispositif mobile comporte au moins une mémoire de travail et une mémoire de stockage de masse. Ces mémoire de des mémoires de type RAM et des mémoires de type mémoire flash ;
- Une interface 140 physique de communication locale câblée. Une telle interface est par exemple une interface série selon, par exemple, l'une des normes USB ou la norme IEEE 1394 ;
- Une interface 130 physique de communication locale sans fil. Une communication sans fil est aussi appelée « communication à travers l'air » et abrégé par communication OTA. Une telle interface est, par exemple, une interface selon l'une des normes Bluetooth, Wifi, Zigbee, BTLE (Bluetooth Low Energy).

La figure 1 montre que le microprocesseur 110 du terminal mobile, la mémoire 120 du terminal mobile, l'interface 140 physique de communication locale câblée du terminal mobile et l'interface 130 physique de communication locale OTA sont interconnectés par un bus 190 du terminal mobile.

La figure 1 montre aussi un boîtier (200) de communication. La figure 1 montre que le boîtier de communication comporte :
- Un microprocesseur 210 ;
- Une mémoire 220 ;
- Des interfaces physiques de communication locale :
   o Une interface 240 physique de communication locale câblée ;
   o Une interface 230 physique de communication locale sans fil ;
- Une première interface 250 physique de communication distante ;
- Une deuxième interface 260 physique de communication distante ;
- Une quatrième interface 270 physique de communication directe.

Une interface de communication distante est, par exemple, une interface de communication selon une norme de téléphonie mobile. Ces normes sont connues comme :
- La norme de première génération ou 1G ;
- La norme de deuxième génération ou 2G ;
- La norme de troisième génération ou 3G ;
- La norme de quatrième génération ou 4G ;
- La norme B40 ;
- ...

La liste ci-dessus n'est pas exhaustive. On peut aussi utiliser une norme Wifi ou Wimax pour établir une communication distante.

Indépendamment de considération mécanique, le boîtier 200 de communication comporte une carte mère de téléphone mobile connectée à une carte d'extension modem de communication OTA. On a donc, de manière simplifiée, des moyens de traitement connecté à deux modems.

Dans la pratique chaque interface physique de communication distante est associée à une carte SIM, ou un équivalent en terme de moyen de gestion des droits d'accès à un réseau. Ces cartes SIM ne sont pas représentées. Une interface physique de communication distante est donc au moins un modem compatible avec une norme de téléphonie mobile.

Une interface de communication directe est une interface de communication radio qui permet à deux dispositifs à portée radio l'un de l'autre de communiquer. Dans une variante de l'invention la quatrième interface de communication directe fonctionne dans la bande de fréquence dite des 900MHz.

On établit dans ce document une différence entre une communication locale, une communication distante et une communication directe. Pour autant certaines normes OTA peuvent être employées pour les trois types de communication. C'est le cas par exemple des normes Wifi.

Dans l'invention on considère qu'une communication locale est une communication entre un terminal et un périphérique de ce terminal.

Par la suite on désigne l'une des interfaces physique de communication locale du boîtier comme l'interface de communication locale du boîtier étant entendue qu'elle communique avec une interface de communication locale compatible du terminal mobile.

La figure 1 montre que le microprocesseur 210 du boîtier, la mémoire 220 du boîtier, l'interface 230 physique de communication locale sans fil du boîtier, l'interface 240 physique de communication locale câblée du boîtier, la première interface 250 physique de communication distante du boîtier, la deuxième interface 260 physique de communication distante du boîtier et la quatrième interface de communication directe du boîtier sont interconnectés par un bus 290 du boîtier.

La figure 1 montre que la première interface 250 physique de communication distante du boîtier permet d'établir une communication OTA avec une première station 350 de base d'un premier réseau de communication mobile.

La figure 1 montre que la deuxième interface 260 physique de communication distante du boîtier permet d'établir une communication OTA avec une deuxième station 360 de base d'un deuxième réseau de communication mobile.

Le boîtier de communication permet donc d'établir deux liens physiques, au sens couche physique du modèle ISO.

Chacun des réseaux de communication est connecté à tout ou partie du réseau 400 Internet.

La figure 1 montre aussi que la quatrième interface physique de communication directe du boîtier permet d'établir une communication OTA avec un autre boîtier 700 directement visiblement par radio depuis le premier boîtier.

La figure 1 montre un serveur 500 d'accès. La figure 1 montre que le serveur 500 comporte :
- Un microprocesseur 510 ;
- Une mémoire 520 ;
- Une interface 530 de communications permettant :
   o Sa connexion au réseau 400 Internet ;
   o Sa connexion à un serveur 600 d'application.

La figure 1 montre que le microprocesseur 510 du serveur d'accès, la mémoire 520 du serveur d'accès et l'interface 530 de communication du serveur d'accès sont interconnectés par un bus 590 du serveur d'accès.

La figure 1 montre que le serveur 600 d'application comporte :
- Un microprocesseur 610 ;
- Une mémoire 620 ;
- Une interface 630 de communications permettant :
   o Sa connexion au serveur 500 d'accès.

La figure 1 montre que le microprocesseur 610 du serveur d'application, la mémoire 620 du serveur d'application et l'interface 630 de communication du serveur d'application sont interconnectés par un bus 690 du serveur d'application.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de ladite application. Un message comporte au moins un champ adresse de destination, un champ d'adresse d'émetteur et une charge utile. Ces principes sont applicables que le dispositif soit réel ou virtuel.

On généralise aussi la notion de mémoire étend entendue que, sauf stipulation contraire plus précise, pour un dispositif cette notion recouvre toute les mémoires auxquelles il peut avoir accès. Cela inclut en particulier ses :
- Mémoires de travail, généralement de type RAM ;
- Mémoires de stockage :
   o Locale ou distante ;
   o Fixe ou amovible ;
   o Mécanique (type disque dur connue sous l'abréviation HD) ou électronique (type carte SD ou disque SSD).

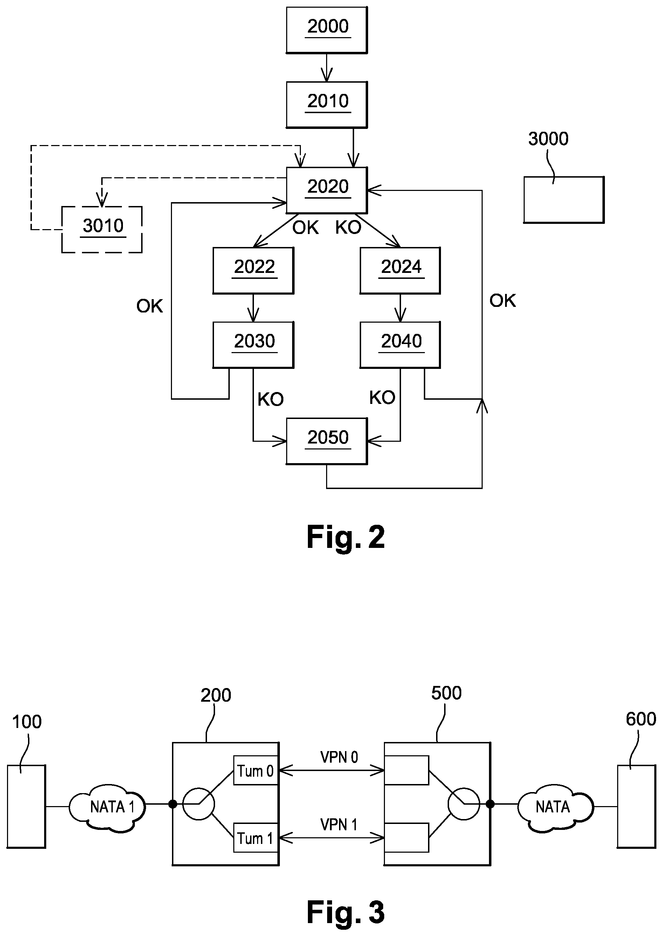

La figure 1 montre que la mémoire 120 du terminal mobile comporte :
- Une zone 120.1 comportant des codes instructions d'application ayant besoin d'établir une connexion avec un serveur applicatif situé sur un réseau applicatif. Ledit réseau applicatif est décrit plus loin avec la figure 3.

La figure 1 montre que la mémoire 220 du boîtier comporte :
- Une zone 220.1 comportant des codes instructions pour la mise en œuvre de l'invention ;
- Une zone 220.2 comportant des codes instruction pour l'établissement de réseaux privés virtuels aussi appelés VPN ;
- Une zone 220.3 de configuration VPN comportant les données de configuration de deux réseaux privés virtuels ;
- Une zone 220.4 table de routage ;

La figure 1 montre que la mémoire 520 du serveur d'accès comporte :
- Une zone 520.1 comportant des codes instructions pour la mise en œuvre de l'invention ;
- Une zone 520.2 comportant des codes instructions pour l'établissement de VPN ;
- Une zone 520.3 table de routage.

Des codes instructions pour l'établissement de VPN sont par exemple l'application OpenVPN (marque déposée). Plus généralement on peut utiliser toute technologie de construction de tunnel compatible avec le routage réseau.

La figure 2 montre une étape 2000 d'initialisation du boîtier 200 de communication. Dans cette étape le boîtier est provisionné avec deux cartes SIM, une pour chaque interface physique de communication distante, ce qui permet à chaque interface physique de communication distante de se connecter à une infrastructure de communication mobile et, via cette connexion, d'obtenir un contexte de communication permettant d'utiliser l'interface physique de communication distante pour accéder au réseau 400 Internet.

Une utilisation classique de l'invention est d'utiliser une carte SIM dite privée, et une carte SIM dite publique. Pour ce paragraphe la distinction entre publique et privée se fait au niveau de l'accessibilité au grand public par opposition à une autorité administrative de type état. Une carte SIM dite privée permet de se connecter à un réseau de télécommunication mobile privé.

Ces étapes d'initialisation sont classiques et effectuées par tout dispositif muni d'une carte SIM. Cela correspond au démarrage du boîtier 200 de communication.

Le boîtier de communication passe alors à une étape 2010 de construction de tunnels VPN. Cette construction se fait selon les configurations préenregistrées dans la zone 220.3 de configuration du boîtier 200 de communication.

Dans la pratique les instructions de configuration des tunnels VPN comporte au moins une adresse de destination pour les tunnels. Dans l'invention cette adresse de destination est une adresse Internet du serveur 500 d'accès.

La figure 3 montre qu'une fois les tunnels VPN construits on aboutit à une situation dans laquelle le boîtier 200 de communication comporte deux interfaces réseau virtuel, chacun associé à une adresse IP :
- Première interface physique de communication distante :
   o Première interface réseau virtuelle « tun0 » associée à une adresse IP_VPN_PRIV, correspondant à un premier réseau virtuel privé VPN0. Cela constitue un premier lien utilisable par le boîtier pour communiquer avec le serveur d'accès.
- Deuxième interface physique de communication distante :
   o Deuxième interface réseau virtuelle « tun1 » associée à une adresse IP_VPN_PUB, correspondant à un deuxième réseau virtuel privé VPN1. Cela constitue un deuxième lien utilisable par le boîtier pour communiquer avec le serveur d'accès.

Les interfaces réseaux virtuelles du boîtier de communication ont leurs interfaces miroirs du côté du serveur 500 d'accès.

L'invention est prévue pour être utilisée dans un contexte tel qu'au moins un serveur applicatif appartient à un réseau applicatif NATA connu à l'avance. Le réseau applicatif NATA est situé « derrière » le serveur d'accès. C'est-à-dire que l'on atteint le réseau applicatif à travers le serveur d'accès.

Egalement pour l'utilisation de l'invention, lorsque le terminal mobile se connecte au boîtier de communication il se voit attribuer une adresse IP prévue à l'avance, par exemple une adresse dépendant d'un identifiant unique du boîtier de communication. Le terminal mobile et le boîtier de communication appartiennent donc à un même réseau NATM. Dans ce réseau NATM, le terminal mobile est configuré pour utiliser le boîtier de communication comme passerelle.

A ce stade de construction des réseaux privés virtuels :
- Le boîtier de communication comporte dans sa table de routage une route par défaut pour atteindre le réseau NATA ;
- Le serveur d'accès comporte dans sa table de routage une route par défaut pour atteindre le réseau NATM.

Ainsi un message réseau émis par le terminal mobile à destination du serveur applicatif est routé dans un réseau privé virtuel selon la table de routage du boîtier de communication.

Ainsi un message réseau émis par le serveur d'application à destination du terminal mobile est routé dans un réseau privé virtuel selon la table de routage du serveur d'accès.

A l'initialisation du boîtier le routage est configuré pour utiliser une interface physique de communication distante prédéterminée. Il s'agit d'une configuration du boîtier.

Le boîtier passe alors à une étape 2020 de surveillance de la qualité des liens établis par au moins une interface physique de communication à distance.

L'étape 2020 est réalisée à une période prédéterminée. Une telle période est comprise dans l'intervalle de 2 à 5 secondes. Dans l'étape 2020 le boîtier de communication produit une donnée, par exemple un message, associant un identifiant d'interface physique de communication distante avec un indicateur de qualité. Un tel indicateur peut être binaire : bonne ou mauvaise. Dans la pratique une seule interface peut être testée, par exemple l'interface correspondant au réseau de communication mobile privé.

Si le test renvoie que les performances de l'interface testée sont bonnes alors on passe à une étape 2022 de sélection de l'interface testé.

Si le test renvoie que les performances de l'interface testée sont mauvaises alors on passe à une étape 2024 de sélection de l'interface non testée.

Dans l'étape 2022 de sélection de l'interface le boîtier effectue une étape 2030 de test de l'interface active pour le routage. Ce test se fait, par exemple, en consultant la table de routage du boîtier pour lire la route active pour atteindre le réseau applicatif NATA. Si cette route correspond à l'interface testée alors le boîtier retourne à l'étape 2020 de test de performances. Si cette route ne correspond pas à l'interface testée alors le boitier passe à une étape 2050 de changement d'interface en passant comme paramètre un identifiant de l'interface qui vient d'être testé.

Dans l'étape 2024 de changement de l'interface le boîtier effectue une étape 2040 de test de l'interface active pour le routage. Ce test se fait, par exemple, en consultant la table de routage du boîtier pour lire la route active pour atteindre le réseau applicatif NATA. Si cette route correspond à l'interface non testée alors le boîtier retourne à l'étape 2020 de test de performance. Si cette route ne correspond pas à l'interface non testée alors le boitier passe à une étape 2050 de changement d'interface en passant comme paramètre un identifiant de l'interface non testée.

Dans l'étape 2050 le boîtier effectue les actions suivantes :
- Il modifie sa table de routage en fonction du paramètre reçu. Dans la pratique cela revient à changer la route pour atteindre le réseau applicatif NATA.
- Emet un message à destination du serveur d'accès pour que celui-ci change sa route pour atteindre le réseau mobile NATM. Un tel message peut contenir un identifiant d'interface à utiliser pour la nouvelle route, ou être un simple message de changement dans la mesure où il n'y a que deux routes possibles.

A la fin de l'étape 2050 le boîtier repasse à l'étape 2020 de teste des performances de l'interface.

Ce changement de route est totalement transparent pour les couches applicatives du terminal mobile, y compris pour les communications vocales. Le basculement d'une route à l'autre se fait sans gêne perceptible pour l'utilisateur.

On note que la variante décrite est une variante avec préférence pour l'interface physique de communication distante correspondant au réseau de communication mobile privée. Si ce réseau est disponible, alors c'est celui qu'il faut utiliser.

L'invention reste valable si on décide de rester sur la route courante tant que le réseau physique sous-jacent a des performances satisfaisantes.

Il existe plusieurs modes d'évaluation des performances. Un premier mode est l'utilisation d'un message sonde. Un tel message est, par exemple, un message « ping ». Le boîtier émet un message « ping » à destination du serveur d'accès. Le serveur d'accès répond à ce message ce qui permet au boîtier de mesurer le temps d'aller-retour du message. En fonction de ce temps le boîtier associe une mesure de performance à l'interface physique. Par exemple, si le temps d'aller-retour est supérieur à 1 seconde, alors les performances sont mauvaises. Sinon, elles sont bonnes.

Un autre mode de mesure des performances est une mesure de gigue réseau. On utilise alors une valeur maximale de gigue comme seuil de basculement de bonnes à mauvaises performances.

Encore un autre mode de mesure de performance est une mesure d'une puissance reçue au niveau d'une antenne de l'interface testé. Si cette puissance est supérieure à un seuil prédéterminé alors les performances sont considérées comme bonnes. Sinon elles sont mauvaises.

L'invention permet au terminal mobile de communiquer avec le serveur applicatif de manière transparente et sécurisée. Les communications entre le terminal mobile et le boîtier de communication sont réalisées à travers une interface de communication locale qu'elle soit avec ou sans fil. La figure 1 illustre que les deux interfaces sont possibles. Sur cette interface physique de communication locale les communications se font en utilisant le protocole IP. On utilise alors « IP over USB » ou « IP over Bluetooth » selon les cas. Dès lors il existe un réseau local (NATM) sur lequel sont connectés au moins le terminal et le boîtier. Dans cette configuration le boîtier est la passerelle du terminal, c'est-à-dire que c'est le boîtier qui gère tout le trafic IP sortant du terminal mobile. Cela inclut en particulier le trafic à destination du réseau applicatif.

Le système de communication ainsi obtenu est à haute disponibilité car en cas de défaillance d'un lien physique, le boîtier peut continuer à communiquer sur l'autre lien. De plus le passage d'un lien à l'autre se fait sans perturbation pour l'utilisateur du terminal.

Dans une variante de l'invention à l'étape 2020 de surveillance le boîtier détecte que les deux interfaces physiques de communication distante sont inutilisables. Une telle situation se produit, par exemple, si le boîtier se retrouve dans un souterrain ou si un utilisateur du boîtier désactive les communications distantes.

Dans ce cas le boîtier passe à une étape 3010 de gestion des communications en utilisant la quatrième interface de communication directe. Pour communiquer sur cette quatrième interface de communication direct le boîtier de communication utilise des protocoles compatibles IP. Pour ce faire chaque boîtier est configuré pour utiliser une adresse IP statique qui lui est propre. Ainsi tous les boîtiers existant appartiennent à un même réseau local et peuvent communiquer entre eux. Les messages émis via la quatrième interface de communication directe sont donc reçus par tous les boîtiers à portée radio les uns des autres.

L'adresse IP utilisée par la quatrième interface de communication directe est soit totalement attribué à la mise en service du boitier, soit calculée à partir de caractéristiques du boîtier. Dans ce cas la calcul garantit une adresse IP unique par boîtier.

Dans une variante de l'invention le boîtier n'accepte de communiquer avec une interface de communication locale sans fil que si le terminal est identifié. Cette identification se fait, par exemple, par provisionnement de l'adresse MAC du terminal mobile au niveau du boîtier de communication. C'est-à-dire que le boîtier de communication comporte une mémoire de configuration dans laquelle sont enregistrées des adresses MAC de dispositifs autorisés à utiliser l'interface physique de communication local sans fil.

Dans cette variante le boîtier de communication comporte une mémoire 220.5 dans laquelle est enregistrée une adresse MAC. Cette adresse MAC sert à filtrer les messages reçus via l'interface physique de communication sans fil. Tous les messages reçus par cette interface dont la valeur d'un champ émetteur ne correspond pas à cette adresse mac sont ignorés.

La mémoire 220.5 peut être écrite en usine à la fabrication du boîtier.

La mémoire 220.5 peut être mise à jour au cours d'une étape 3000 consécutive à la détection par le boîtier d'une connexion physique sur son interface physique de communication locale, c'est-à-dire, dans un exemple, sur son interface USB. Dans ce cas le terminal est doté d'un pilote USB propre à l'invention. Ce pilote propre à l'invention émet, au cours de la négociation USB, un message comportant l'adresse MAC de son interface physique de communication sans fil.

A la réception de ce message, le boîtier met à jour le contenu de la mémoire de provision.

Dans cette variante de l'invention un terminal ne peut communiquer sans fil avec un boîtier que s'il lui a été connecté au moins une fois avec fil

L'étape 3000 de provisionnement se produit à chaque connexion avec fil du boîtier avec un périphérique. Il est ainsi possible d'apparier un boîtier avec n'importe quel terminal comportant un pilote compatible.

## Revendications

1. Système de communication sécurisé à très haute disponibilité pour un terminal (100) mobile pour l'établissement de communications locale et distante, ledit système comprenant ledit terminal mobile (100) et un boîtier de communication (200) :
- ledit terminal est connecté audit boîtier (200) de communication, ledit boîtier de communication présentant au moins 4 interfaces (230, 240, 250, 260, 270) physiques de communication :
• une de ces interfaces (230, 240) physiques servant à établir des communications (NATM) avec le terminal mobile,
• deux de ces interfaces physiques (250, 260) servant à établir des communications distantes via des réseaux mobiles, et
• la quatrième (270) de ces interfaces physiques servant à établir des communications locales avec un autre boîtier (700) par communication directe et selon un protocole IP selon un plan d'adressage prédéterminé ;
- le boîtier de communication utilisant la quatrième interface lorsque la première interface de communication distante et la deuxième interface de communication distante sont défaillantes,
dans lequel le terminal mobile communique avec un serveur applicatif comme suit :
- le boîtier de communication est connecté à un serveur (500) d'accès par un premier lien (VPN0) établi à travers la première interface physique de communication distante et par un deuxième lien (VPN1) établi à travers la deuxième interface physique de communication distante ;
- le serveur (600) applicatif est connecté (NATA) au serveur d'accès, le terminal et le serveur applicatif communicant à travers le boitier de communication et le serveur d'accès en utilisant un des deux liens précédemment établis ;
- le boîtier de communication est la passerelle réseau du terminal ;
- le boitier de communication :
• maintient (2020 - 2050) une table locale de routage en fonction de performances d'acheminements d'au moins une interface physique de communications distantes ;
• maintient (2050) une table distante de routage sur le serveur d'accès pour qu'à un même instant le boîtier de communication et le serveur d'accès utilisent le même lien,
dans lequel une performance d'acheminement d'une interface physique de communication est mesurée par le temps de réponse à un message prédéterminé émis via l'interface de communication distante dont il faut évaluer des performances d'acheminement,
dans lequel le message prédéterminé est émis à une période comprise dans l'intervalle 2 secondes - 5 secondes, et
dans lequel la performance d'acheminement d'une interface physique est considérée comme défaillante si le temps de réponse au message prédéterminé est supérieur à 1 seconde.

2. Système de communication sécurisé à très haute disponibilité selon la revendication 1, **caractérisé en ce que** la quatrième interface fonctionne dans une bande de fréquence centrée sur 900MHz.

3. Système de communication selon la revendication 1 ou 2, **caractérisé en ce que** l'interface locale du boîtier de communication est une interface (240) série câblée.

4. Système de communication selon la revendication 3, **caractérisé en ce que** l'interface locale du boîtier de communication est une interface (230) de communication sans fil.

5. Système de communication selon l'une des revendications 1 à 4, **caractérisé en ce qu'**une performance d'acheminement d'une interface physique de communication est une mesure d'une puissance d'un signal reçu sur l'interface physique de communication distante dont il faut évaluer des performances d'acheminement.

6. Système de communication sécurisé selon l'une des revendications 1 à 5, **caractérisé en ce que** le premier lien et le deuxième lien sont des tunnels virtuels privés.

7. Système de communication sécurisé selon l'une des revendications précédentes, **caractérisé en ce que** le boîtier comporte une mémoire de provision dans laquelle est enregistrée un identifiant unique d'un terminal, seul le terminal ayant cet identifiant étant autorisé à communiquer avec le boîtier par une interface de communication locale sans fil, le boîtier filtrant les communication effectuées par l'interface de communication locale sans fil, l'identifiant étant une adresse MAC de l'interface physique de communication sans fil du terminal.

8. Système de communication sécurisé selon la revendication 7 **caractérisé en ce que** la mémoire de provision est écrite au moment de la détection d'une connexion sur une interface physique de communication câblée entre le terminal mobile et le boîtier de communication, le terminal jouant le rôle de périphérique du boîtier.

## Patentansprüche

1. Sicheres Kommunikationssystem mit sehr hoher Verfügbarkeit für ein mobiles Endgerät (100) zum Aufbau lokaler und entfernter Kommunikationen, wobei das System das mobile Endgerät (100) und eine Kommunikationsvorrichtung (200) umfasst:
- das Endgerät mit der Kommunikationsvorrichtung (200) verbunden ist, wobei die Kommunikationsvorrichtung mindestens 4 physische Kommunikationsschnittstellen (230, 240, 250, 260, 270) aufweist:
• eine dieser physischen Schnittstellen (230, 240) zum Aufbau von Kommunikationen (NATM) mit dem mobilen Endgerät dient,
• zwei dieser physischen Schnittstellen (250, 260) zum Aufbau entfernter Kommunikationen über Mobilfunknetze dienen, und
• die vierte (270) dieser physischen Schnittstellen zum Aufbau lokaler Kommunikationen mit einer anderen Vorrichtung (700) durch Direktkommunikation und gemäß einem IP-Protokoll nach einem vorbestimmten Adressierungsplan dient;
- die Kommunikationsvorrichtung die vierte Schnittstelle verwendet, wenn die erste Schnittstelle entfernter Kommunikation und die zweite Schnittstelle entfernter Kommunikation ausfallen,
wobei das mobile Endgerät mit einem Anwendungsserver wie folgt kommuniziert:
- die Kommunikationsvorrichtung ist mit einem Zugangsserver (500) über eine erste Verbindung (VPN0) verbunden, die über die erste physische Schnittstelle entfernter Kommunikation aufgebaut ist, und über eine zweite Verbindung (VPN1), die über die zweite physische Schnittstelle entfernter Kommunikation aufgebaut ist;
- der Anwendungsserver (600) ist mit dem Zugangsserver verbunden (NATA), wobei das Endgerät und der Anwendungsserver über die Kommunikationsvorrichtung und den Zugangsserver unter Verwendung einer der beiden zuvor aufgebauten Verbindungen kommunizieren;
- die Kommunikationsvorrichtung das Netz-Gateway des Endgeräts ist;
- die Kommunikationsvorrichtung:
• erhält eine lokale Routing-Tabelle in Abhängigkeit von Weiterleitungsleistungen mindestens einer physischen Schnittstelle entfernter Kommunikation aufrecht (2020 bis 2050);
• erhält eine entfernte Routing-Tabelle auf dem ZugangsServer aufrecht (2050), sodass zum gleichen Zeitpunkt sowohl die Kommunikationsvorrichtung als auch der Zugangsserver dieselbe Verbindung nutzen,
wobei eine Weiterleitungsleistung einer physischen Kommunikationsschnittstelle durch die Antwortzeit auf eine vorbestimmte Nachricht gemessen wird, die über die Schnittstelle entfernter Kommunikation gesendet wird, deren Weiterleitungsleistung bewertet werden soll,
wobei die vorbestimmte Nachricht mit einer Periode im Intervall von 2 Sekunden bis 5 Sekunden gesendet wird, und
wobei die Weiterleitungsleistung einer physischen Schnittstelle als ausgefallen betrachtet wird, wenn die Antwortzeit auf die vorbestimmte Nachricht größer als 1 Sekunde ist.

2. Sicheres Kommunikationssystem mit sehr hoher Verfügbarkeit nach Anspruch 1, **dadurch gekennzeichnet, dass** die vierte Schnittstelle in einem Frequenzband mit Mittenfrequenz 900 MHz arbeitet.

3. Kommunikationssystem nach Anspruch 1 oder 2, **dadurch gekennzeichnet, dass** die lokale Schnittstelle der Kommunikationsvorrichtung eine kabelgebundene serielle Schnittstelle (240) ist.

4. Kommunikationssystem nach Anspruch 3, **dadurch gekennzeichnet, dass** die lokale Schnittstelle der Kommunikationsvorrichtung eine drahtlose Kommunikationsschnittstelle (230) ist.

5. Kommunikationssystem nach einem der Ansprüche 1 bis 4, **dadurch gekennzeichnet, dass** eine Weiterleitungsleistung einer physischen Kommunikationsschnittstelle eine Messung einer Leistung eines über die physische Schnittstelle entfernter Kommunikation empfangenen Signals ist, dessen Weiterleitungsleistung bewertet werden soll.

6. Sicheres Kommunikationssystem nach einem der Ansprüche 1 bis 5, **dadurch gekennzeichnet, dass** die erste Verbindung und die zweite Verbindung virtuelle private Tunnel sind.

7. Sicheres Kommunikationssystem nach einem der vorstehenden Ansprüche, **dadurch gekennzeichnet, dass** die Vorrichtung einen Bereitstellungsspeicher aufweist, in dem ein eindeutiger Identifikator eines Endgeräts gespeichert ist, wobei nur das Endgerät mit diesem Identifikator berechtigt ist, über eine drahtlose lokale Kommunikationsschnittstelle mit der Vorrichtung zu kommunizieren, wobei die Vorrichtung die über die drahtlose lokale Kommunikationsschnittstelle durchgeführten Kommunikationen filtert, wobei der Identifikator eine MAC-Adresse der drahtlosen physischen Kommunikationsschnittstelle des Endgeräts ist.

8. Sicheres Kommunikationssystem nach Anspruch 7, **dadurch gekennzeichnet, dass** der Bereitstellungsspeicher zu dem Zeitpunkt beschrieben wird, zu dem eine Verbindung über eine kabelgebundene physische Kommunikationsschnittstelle zwischen dem mobilen Endgerät und der Kommunikationsvorrichtung erkannt wird, wobei das Endgerät die Rolle einer Peripherieeinrichtung der Vorrichtung übernimmt.

## Claims

1. A very high-availability secure communication system for a mobile terminal (100) for establishing local and remote communications, said system comprising a mobile terminal (100) and a communication box (200):
- said terminal is connected to said communication box (200), said communication box having at least 4 physical communication interfaces (230, 240, 250, 260, 270):
• one of these physical interfaces (230, 240) serving to establish communications (NATM) with the mobile terminal,
• two of these physical interfaces (250, 260) serving to establish remote communications via mobile networks, and
• the fourth (270) of these physical interfaces serving to establish local communications with another box (700) by direct communication and according to an **IP** protocol according to a predetermined addressing plan
- the communication box using the fourth interface when the first remote communication interface and the second remote communication interface are defective,
wherein the mobile terminal communicates with an application server as follows:
- the communication box is connected to an access server (500) by a first link (VPN0) established through the first physical remote communication interface and by a second link (VPN1) established through the second physical remote communication interface;
- the application server (600) is connected (NATA) to the access server, the terminal and the application server communicating through the communication box and the access server using one of the two previously established links;
- the communication box is the network gateway of the terminal;
- the communication box:
• maintains (2020 - 2050) a local routing table based on the routing performance of at least one physical remote communication interface;
• maintains (2050) a remote routing table on the access server so that the communication box and the access server are using the same link at the same time,
wherein a routing performance of a physical communication interface is measured by a response time to a predetermined message transmitted via the remote communication interface, the routing performance of which is to be evaluated,
wherein the predetermined message is transmitted at a period within the range of 2 seconds to 5 seconds,
wherein the routing performance of a physical interface is considered to be defective if the response time to the predetermined message is greater than 1 second.

2. The very high-availability secure communication system according to claim 1, **characterized in that** the fourth interface operates in a frequency band centered on 900 MHz.

3. The communication system according to claim 1 or 2, **characterized in that** the local interface of the communication box is a wired serial interface (240).

4. The communication system according to claim 3, **characterized in that** the local interface of the communication box is a wireless communication interface (230).

5. The communication system according to one of claims 1 to 4, **characterized in that** the routing performance of a physical communication interface is a measure of the power of a signal received on the physical remote communication interface, the routing performance of which is to be evaluated.

6. The secure communication system according to one of claims 1 to 5, **characterized in that** the first link and the second link are virtual private tunnels.

7. The secure communication system according to one of the preceding claims, **characterized in that** the box comprises a provisional memory in which a unique identifier of a terminal is stored, only the terminal having this identifier being authorized to communicate with the box by a wireless local communication interface, the box filtering communications made by the wireless local communication interface, the identifier being a MAC address of the wireless physical communication interface of the terminal.

8. The secure communication system according to claim 7, **characterized in that** the provisional memory is written at the moment a connection is detected on a wired physical communication interface between the mobile terminal and the communication box, the terminal serving as a peripheral device for the box.
